# EUROPEAN PATENT APPLICATION

(11) **EP 1 596 277 A1**
(43) Date of publication of application: **16.11.2005**
(21) Application number: 04712708.9
(22) Date of filing: 19.02.2004
(51) Int. Cl.: G06F 7/04, H04L 7/08, G11B 20/14, H04N 7/24

(54) **PATTERN DETECTION DEVICE**

(30) Priority: 21.02.2003 JP 2003044407
(71) Applicant: SONY CORPORATION, Tokyo 141-0001 (JP)
(72) Inventor: OTAKE, Hiroyuki, Sony Lsi Design Inc., Yokohama-shi, Kanagawa 240-0005 (JP)
(74) Representative: Thévenet, Jean-Bruno
(86) International application number: PCT/JP2004/001894
(87) International publication number: WO 2004/084062

(57) **Abstract**

To realize a pattern detection apparatus enabling to set a hardware resource holding a detection pattern and a detection position adequately and enabling to reduce overhead of processing after pattern detection in the case of performing pattern detection in response to a comparison result of detection target data and an entry pattern. The pattern detection apparatus compares an entry pattern (ETP) held by an entry pattern holding unit (124) with data inputted from the outside of the pattern detection apparatus in a comparator 122, and outputs a hit signal (HIT) showing agreement when agreeing. A flag holding unit (126) outputs a held flag signal (FLG) to a pattern detection/non-detection control unit (130) as a control signal (CTL) when the hit signal (HIT) is outputted. The pattern detection/non-detection control unit (130) outputs a holding enable signal (HEB) for holding data showing a position of detected data in accordance with the hit signal (HIT) and the control signal (CTL). A detection position registration unit (140) has registers corresponding to the number of detection targets and saves a readout pointer applied in response to the holding enable signal (HEB) in a corresponding register.

## Description

### TECHNICAL FIELD

The present invention relates to a pattern detection apparatus. In particular, the present invention relates to a pattern detection apparatus (a pattern search apparatus) detecting (searching) whether or not data having a predetermined pattern exists in data stores in a memory or data inputted from the outside.

### BACKGROUND ART

For example, Kokai (Japanese unexamined patent publication) No. H5 (1993)-76056, Kokai (Japanese unexamined patent publication) No. H7 (1995)-37326 Kokai (Japanese unexamined patent publication) No. H9 (1997)-321726 disclose a matching method performing a pattern matching which performs whether or not data stored in a memory space agrees with a pattern to become a target of detection (search) usually (hereinafter, described as a detection target pattern or an entry pattern) by using the detection target pattern in a pattern detection circuit (pattern search apparatus) to detect whether or not data having a predetermined pattern exists in data of search target.

In the pattern matching method, data is read out sequentially with moving a readout address in a memory space in which data to become a detection target is stored, and the data is compared whether or not it agrees with an entry pattern. The readout address when agreeing is stored in storage means as a detection position (or a match position). This match position shows in which position of the memory space data having an arrangement equivalent to the entry pattern exists. In the subsequent processing, desired data processing is performed by using the match position as a mark.

In a general pattern detection circuit, a comparison circuit and a detection position registration circuit are included. In the comparison circuit, stored data is read out sequentially from a memory space of a search target and the readout data is compared whether or not it agrees with an entry pattern. Then, a detection agreement signal (a hit signal) is outputted from the comparison circuit when agreeing with the comparison target. The detection position storage circuit is composed of a register, a memory and so on. When receiving the hit signal from the comparison circuit, the detection position storage circuit holds a count value from a search position, namely, the readout address at that time or a predetermined reference position in the register, the memory and so on.

In a conventional method, in the case that data agreeing with the entry pattern exists in a vast memory space, since a detection position should be stored every time that the entry pattern is agreed as a result of the search and the hit signal is outputted, it is necessary to provide a register having an enough bit width or a large-capacity memory.

For example, when performing pattern detection about data stored in a memory space of 2ⁿ, a register having bit widths of number of the hit signals or a memory having a capacity of number of the hit signals becomes necessary. Concretely, when number of the match position is defined as m, a register having bit widths of a total of 2ⁿ × m or a memory of a total of 2ⁿ × m addresses becomes necessary. As n and m increase, an amount of a hardware resource (resource) such as a register and a memory which is necessary to store the match positions also increases.

For example, in the MPEG which is one of a standard of compressing and coding a moving image and an audio signal, pattern detection in a compressed and coded data series (hereinafter, referred to as a bit stream or a data stream) is performed in a system layer and a video layer respectively.

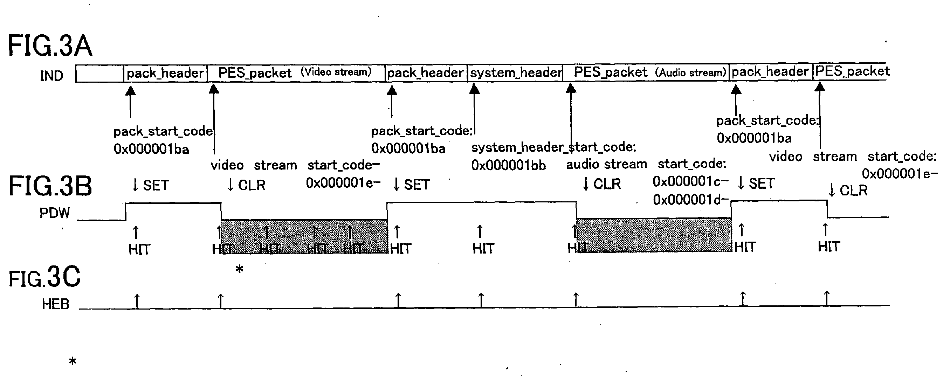

A bit stream of MPEG is placed as one byte code for every system layer or video layer following a head of three bytes identification code [0x000001] as exemplified in FIG. 3A and FIG. 4 to FIG. 7. A plurality of kinds of a system identification code (stream ID) is defined as a system layer and a plurality of a start code (start code) is defined as a video layer.

In detection of a system layer, pattern detection is performed by using a detected stream ID as an entry pattern. Further, in detection of a video layer, pattern detection is performed by using a start code desired to be detected as an entry pattern.

Meanwhile, when detecting a stream ID of a system layer and a start code of a video stream for a bit stream generated according to the MPEG by using the above-mentioned conventional pattern detection circuit, first, a bit stream is read out from a memory sequentially with defining the data [0x000001] as an entry pattern and pattern detection is performed. Then, following detection of the data [0x000001], pattern detection is performed by defining one byte code, for example, a stream ID of a system layer or a start code of a video layer as an entry pattern. For this reason, a large amount of register or memory becomes necessary to store match positions. Further, a quite large amount of hardware resource is necessary to store entry patterns.

Additionally, in a conventional pattern detection circuit, a hardware resource for holding match positions can be reduced by performing processing sequentially for every hit, although, the overhead for pattern detection and condition branching after hitting becomes large. For reducing this overhead, pattern detection of a certain large unit becomes necessary. For attaining this, a mechanism performing pattern detection with assembling a memory space which becomes a detection target in a pattern detection circuit to some degree becomes necessary, however, this is not equipped usually, therefore there is a disadvantage that reduction of the overhead of pattern detection cannot be realized.

### DISCLOSURE OF THE INVENTION

The present invention was made in consideration of such a circumstance, the object is to provide a pattern detection circuit enabling to save a resource for storing a detection pattern and a detection position and enabling to reduce the overhead of processing after pattern is detected when detecting data having a desired pattern from a memory space becomes a search target by pattern matching.

For attaining the object, a pattern detection circuit of the present invention has detection pattern storage means of storing an entry pattern to become a detection target, flag storage means of storing a flag signal corresponding to each the entry pattern, comparison means of comparing inputted data with the entry pattern stored in the detection pattern storage means, and detection position storage means of storing the detection position in response to a flag signal corresponding to the entry pattern stored in the flag storage means when the inputted data is corresponding to the entry pattern as a result of a comparison by the comparison means.

Further, preferably, the pattern detection apparatus of the present invention has additionally detection position storage control means setting a pattern detection window signal in an active state, when showing that the flag signal corresponding to the entry pattern stores a detection position, and setting the pattern detection window signal in an inactive state, when showing that the flag signal corresponding to the entry pattern does not store a detection position, in the case of judging that the input data and the entry pattern agree.

Further, in the present invention, preferably, the detection position storage means stores a detection position of the entry pattern when the pattern detection window signal is in an active state, and does not store a detection position of the entry pattern when the pattern detection window signal is in an inactive state.

Additionally, in the present invention, preferably, the input data is moving image data and audio data compressed and coded in accordance with the MPEG standard, and the entry pattern is set in response to identification data showing a head of packets included in the compressed and coded data.

According to the present invention, a flag signal is set for every entry pattern of a search target. Input data and an entry pattern are compared by comparison means, as a result of the comparison, in the case that the input data agrees with the entry pattern in accordance with whether or not the flag signal corresponding to the entry pattern is effective, namely, whether or not the flag signal shows storage of a detection position, the entry pattern and the detection position are stored when showing the storage of the detection position, and, on the contrary, the storage of the detection position is not performed when showing that the flag signal does not store the detection position. For this reason, it becomes possible to specify a necessary registered detection position preliminarily, and it becomes possible to utilize a resource of storage means storing the detection position efficiently.

### BRIEF DESCRIPTION OF THE DRAWINGS

Fig. 1 is a block diagram showing an embodiment of a pattern detection circuit according to the present invention.
Fig. 2 is a block diagram showing a configuration of a pattern detection/non-detection control unit in a pattern detection circuit of the present invention.
FIGS. 3A to 3C are views showing an example of a data stream compressed and coded according to the MPEG standard.
FIG. 4 is a view showing stream identification numbers of a system layer in the MPEG standard.
FIG. 5 is a view showing an example of start codes of a video layer in the MPEG standard.
FIG. 6 is a view showing an example of entry patterns for detecting a start code of each layer.
FIG. 7 is a view showing an example of each entry pattern and a flag signal corresponding to it.

### BEST MODE FOR CARRYING OUT THE INVENTION

Hereinafter, embodiments of the present invention will be explained in detail by drawings.

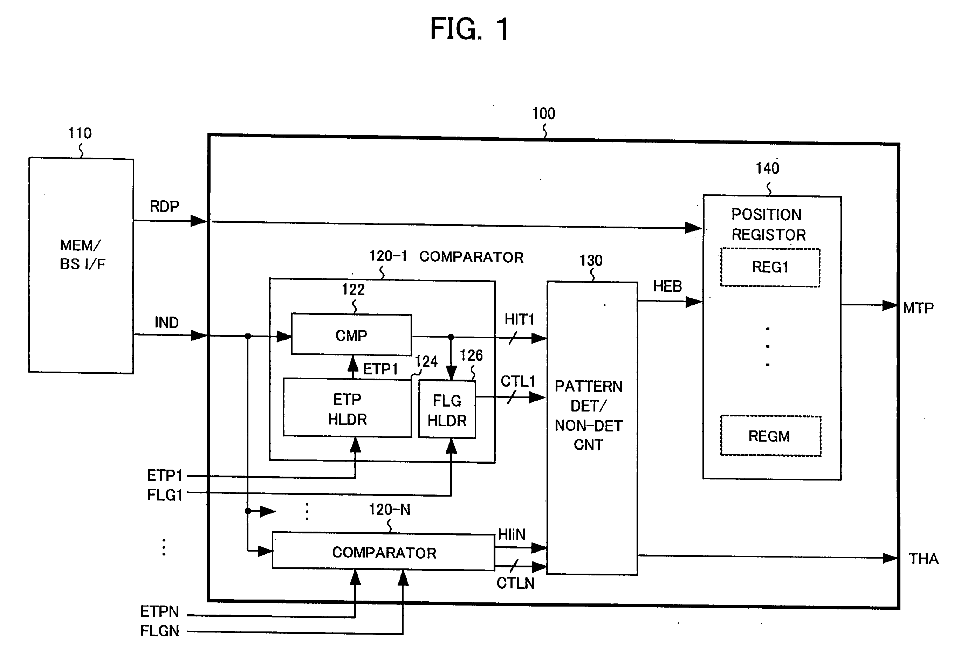

FIG. 1 is a block diagram showing an embodiment of a pattern detection apparatus according to the present invention.

As shown in a view, a pattern detection apparatus 100 of the present embodiment has a plurality of comparison units 120-1 to 120-N (N > 0, N is an integer), a pattern detection/non-detection control unit 130 and a detection position registration unit 140.

In FIG. 1, a memory/bit stream interface (MEM/BS-I/F: Bitstream I/F, hereinafter, memory/BS-I/F) 110 provides input data IND and a readout pointer RDP, for example, read out from storage means to the pattern detection apparatus 100. It is a video signal coded by the MPEG illustrated in FIG. 3A as the input data IND, and it is an address of the video signal and so on as the readout pointer RDP.

Hereinafter, a configuration of the pattern detection circuit 100 of the present embodiment will be explained.

A plurality of the comparison units 120-1 to 120-N have the same configuration respectively. Therefore, in FIG. 1, only an internal configuration of the first comparison unit 120-1 is shown by representing them. The first comparison unit 120-1 has a comparator 122, an entry pattern holding unit 124 holding a detection target pattern or the entry pattern ETP1 and a flag holding unit holding a flag FLG1.

Number of the comparison units 120-1 to 120-N is corresponding to the entry pattern ETP1 to ETPN to become the detection target. The entry pattern ETP1 to ETPN and the flag FLG1 to ETPN correspond one-on-one such as the entry pattern ETP1 and the flag FLG1.

The entry patterns ETP1 to ETPN are patterns to become targets of detection among data included in the input data IND. A detailed exemplification of the entry patterns ETP1 to ETPN will be described by referring to FIG. 3A.

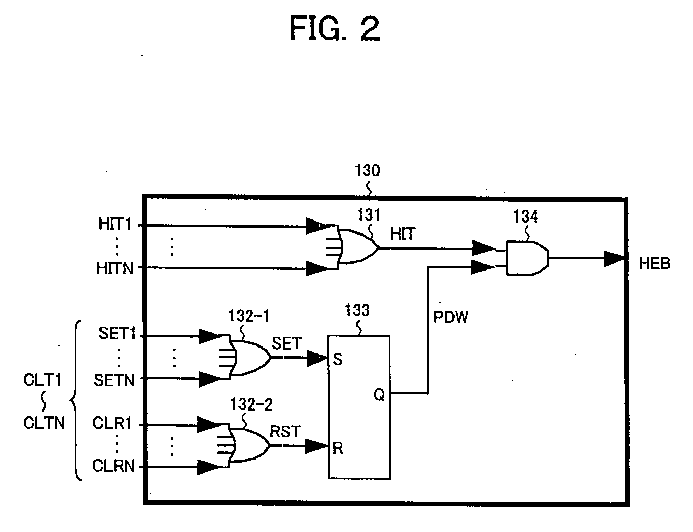

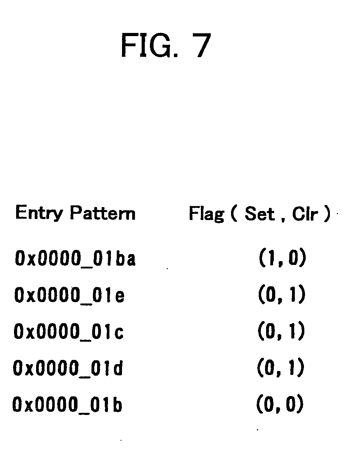

Each of the flags FLG1 to FLGN is corresponding to each of the entry patterns ETP1 to ETPN and, for example, as amplified by referring FIG. 7, is composed of set data SET including a set use signal of a set/reset flip-flop 133 in the pattern detection/non-detection control unit 130 illustrated in FIG. 2 and reset data (or clear data CLR) that is a reset use signal.

The comparator 122 compares the input data IND inputted from the memory/BS-I/F 110 outside of the pattern detection apparatus 100 and the first entry pattern ETP1 inputted from the entry pattern holding unit 124 and outputs a first hit signal HIT1 in response to a result of the comparison. For example, the comparator 122 outputs, for example, a high level (1) hit signal HIT1 when the input data IND and the first entry pattern ETP1 are corresponding, and outputs a low level (0) hit signal HIT1 in the case of disagreement.

The entry pattern holding unit 124 stores the first entry pattern ETP1 inputted from the outside of the pattern detection apparatus 100, reads out the stored first entry pattern ETP1 and outputs it to the comparator 122.

The flag holding unit 126 holds a flag signal FLG1 inputted from the outside of the pattern detection apparatus 100 and outputs the held first flag FLG1 as a first control signal CTL1 when the first hit signal HIT1 that is a comparison result of the comparator 122 is in a high level. The control signal CTL1 is composed of the set signal and the clear signal as well as the flag FLG 1.

The pattern detection-non-detection control unit 130 generates a pattern detection window signal PDW controlling the registration of a detected match position in response to the control signals CTL1 to CTLN outputted from the comparator 120-1 to 120-N. An example of the pattern detection window signal PDW is shown in FIG. 3B.

In the pattern detection apparatus 100 of the present embodiment, as mentioned above, each of a plurality of the comparison units 120-1 to 120-N is composed of the comparator 122, the entry pattern holding unit 124 and the flag holding unit 126. In each the comparison unit, a comparison of the inputted input data IND and the held entry patterns ETP1 to ETPN is performed, based on the result, the hit signals HIT1 to HITN and the control signals CTL1 to CTLN are outputted. Namely, in the pattern detection apparatus of the present embodiment, it is possible to detect a plurality of (N pieces) the entry patterns ETP1 to ETPN by a plurality of the comparison units 120-1 to 120-N.

Note that, a plurality of the flags FLG1 to FLGN define control information for generation of the pattern detection window signal PDW about the corresponding entry patterns ETP1 to ETPN respectively.

The pattern detection/non-detection control unit 130 generates a holding enable signal HEB in response to the hit signals HIT1 to HITN and the control signals CTL1 to CTLN from a plurality of comparison units 120-1 to 120-N and outputs it to the detection position registration unit 140 storing (registering) the readout pointer RDP outputted from the memory/BS-I/F 110.

FIG. 2 shows a configuration example of the pattern detection/non-detection control unit 130.

The pattern detection/non-detection control unit 130 has OR gates 131, 132-1 and 132-2, a reset/set type flip-flop 133 and an AND gate 134.

The OR gate 131 operates logical addition (OR) of a plurality of the hit signals HIT1 to HITN outputted from a plurality of the comparison unit 120-1 to 120-N and outputs, for example, the high level (1) hit signal HIT to an AND gate 134 if there is a high level hit signal even at one among a plurality of hit signals HIT1 to HITN as a result of the operation. On the other hand, the OR gate 131 outputs the low level (0) hit signal HIT when all of a plurality of the hit signals HIT1 to HITN are in a low level.

The OR gate 132-1 operates logical addition of a plurality of set signals SET1 to SETN included in a plurality of the control signals CTL1 to CTLN outputted from a plurality of the comparison units 120-1 to 120-N. As a result of the operation, if there is a high level set signal even at one among a plurality of set signals SET1 to SETN, the OR gate 132-1 inputs it to a set signal input terminal S of the RS flip-flop 133 as, for example, a high level (1) set signal SET. On the other hand, the OR gate 132-1 outputs the low level (0) set signal SET when all of a plurality of the set signals SET1 to SETN are in a low level.

The OR gate 132-2 operates logical addition of clear signals CLR1 to CLRN included in a plurality of the control signals CTL1 to CTLN outputted from a plurality of the comparison units 120-1 to 120-N. As a result of the operation, if there is a high level clear signal even at one among a plurality of clear signals CLR1 to CLRN, the OR gate 132-2 inputs it to a reset signal input terminal R of the RS flip-flop 133 as, for example, a high level (1) reset signal RST. On the other hand, the OR gate 132-2 outputs the low level (0) clear signal CLR when all of a plurality of the clear signals CLR1 to CLRN are in a low level.

The RS flip-flop 133 outputs the pattern detection window signal PDW in response to the set signal SET inputted from the OR gate 132-1 and the reset signal RST inputted from the OR gate 132-2. Namely, the RS flip-flop 133 outputs a high level (1) pattern detection window signal PDW when the high level (1) set signal SET is applied to the set signal input terminal S, and defines the pattern detection window signal PDW to a low level (0) when the high level (1) reset signal RST is applied to the reset signal input terminal R.

The AND gate 134 operates logical multiplication of the hit signal HIT from the OR gate 131 and the pattern detection window signal PDW from the RS flip-flop 133, and outputs the high level (1) holding enable signal HEB to the detection position registration unit 140 only when the hit signal HIT and the pattern detection window signal PDW are in a high level together.

In the pattern detection/non-detection control unit 130, when a high level hit signal is out putted from either of a plurality of the comparison units 120-1 to 120-N, a high level hit signal HIT is outputted from the OR gate 131. Further, when a set signal is outputted from either of a plurality of the comparison units 120-1 to 120-N, the set signal SET is outputted by the OR gate 132-1. In response to this, an active state, for example, a high level pattern detection window signal is outputted from the RS flip-flop 133. During the pattern detection window signal PDW is held in a high level, the hit signal HIT outputted from the OR gate 131 is outputted as the holding enable signal HED via the AND gate 134.

Meanwhile, when a clear signal is outputted from either of a plurality of the comparison unit 120-1 to 120-N, the reset signal RST is outputted by the OR gate 132-2. In response to this, an inactive state, for example, a low level pattern detection window signal is outputted from the RS flip-flop 133. During the pattern detection window signal PDW is held in a low level, output of the AND gate 134 is also held in a low level, at this time, the hit signal HIT outputted from the OR gate 131 is ignored (becomes invalid state).

Next, the detection position registration unit 140 will be explained.

As shown in FIG. 1, the detection position registration unit 140 has a plurality of registers 1 to M. The detection position registration unit 140 performs a registration of the readout pointer RDP outputted from the memory/BS-I/F 110 with defining it as a detection position that data agreeing with the entry pattern existed in accordance with the holding enable signal HEB from the pattern detection/non-detection control unit 130. When describing concretely, in the detection position registration unit 140, the holding enable signal HEB from the pattern detection/non-detection control unit 130 is monitored, when the holding enable signal HEB is in a high level of an active state, the readout pointer RDP outputted from the memory/BS-I/F 110 is stored in the register 1 to the register M sequentially.

As mentioned above, in the pattern detection/non-detection control unit 130, the holding enable signal HEB is generated in response to a plurality of the control signals HIT1 to HITN and a plurality of control signals CTL1 to CTLN from a plurality of the comparator 120-1 to 120-N, and supplied to the detection position registration unit 140. As a result, when the pattern detection window signal PDW generated in response to the set signals SET1 to SETN and the clear signals CLR1 to CLRN included in the control signals CTL1 to CTLN is in a high level and either of a plurality of the hit signals HIT1 to HITN from a plurality of the comparator 120-1 to 120-N is in a high level, it becomes possible to output the high level holding enable signal HEB to the detection position registration unit 140.

The detection position registration unit 140 stores the readout pointer RDP inputted from the memory/BS-I/F 110 in a corresponding register among the register 1 to the register M when the holding enable signal HEB is in a high level of an active level. Hereby, the registration of the detection position (match position) can be performed in the register 1 to the register M for only a necessary pattern among the detected entry patterns. In other words, since it is only necessary to provide the register 1 to the register M by the number of the patterns of the detection targets, a hardware resource of the pattern detection apparatus 100 can be used effectively.

Hereinafter, an action of the pattern detection apparatus 100 of the present embodiment will be explained based on a concrete example.

The input data IND inputted from the memory/BS-I/F 110 to the pattern detection apparatus 100 of the present invention is moving image or audio data compressed and coded in accordance with a predetermined coding standard, for example, the MPEG standard. The compressed and coded data is read out from the memory or the other recording media, and supplied to the pattern detection apparatus 100 of the present invention in a from of becoming the bit stream, namely, a series of contiguous data via the memory/BS-I/F 110. Further, the readout pointer RDP showing a detection position is also outputted at the same time as the bit stream. The readout pointer RDP is a count value increasing by a predetermined unit at the time of a pointer of reading out the data IND from the memory (for example, a readout address) or a predetermined time point as a starting point.

The bit stream compressed and coded in accordance with the MPEG standard is separated by a packet unit as shown in FIG. 3A. In FIG. 3A, an example of moving image and audio data in accordance with the MPEG standard is shown.

As shown in FIG. 3A, in the bit stream of the coded data, following a packet header (pack_header) or a system header (system_header), a PES packet (PES_packet) is arranged.

In the packet header, following a packet start code showing a start of the packet header, attribute information showing an attribute of the packet data and so on is included.

In the system header, following a system header start code showing a start of the system header, attribute information and so on is included.

There is the PES packet composed of the video data, namely the compressed and coded moving image data, and the PES packet composed of the audio data, namely the compressed and coded audio data. In the head of each PES packet, a video stream start code or an audio stream start code showing a start of the packet is arranged.

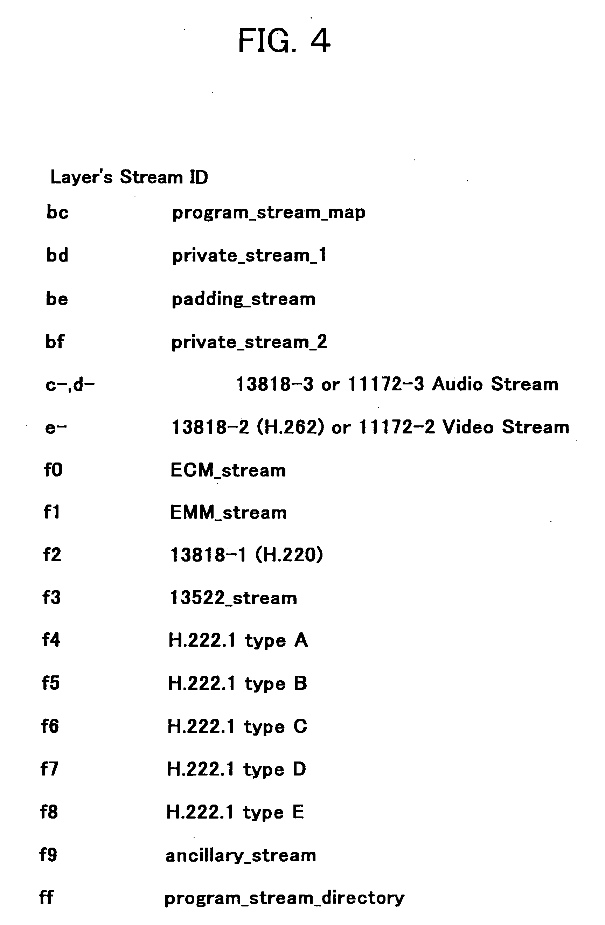

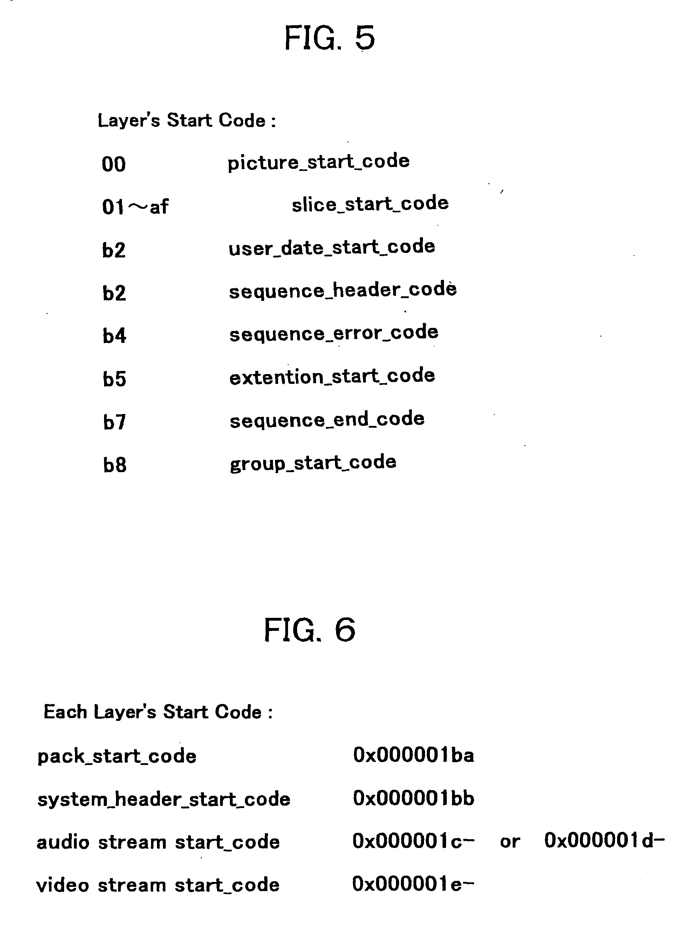

FIG. 4 shows an example of a stream identification number (stream ID) of the system layer. FIG. 5 shows an example of the start code of the video layer. Note that, the stream ID or the start code shown in FIG. 4 and FIG. 5 is arranged following a three byte code [0x000001].

FIG. 6 is a view showing the entry pattern for detecting the start code of each layer. As shown in FIG. 6, the entry pattern for detecting the packet start code is 32 bits (four bytes) data [0x000001ba], and the entry pattern for detecting the system header start code is four bytes data [0x000001bb].

Further, the entry pattern for detecting the audio stream start code becomes four bytes data [0x000001c-] or [0x000001d-], and the entry pattern for detecting the video stream start code becomes four bytes data [0x000001e-]. Here, a hyphen "-" means either of four bytes data [0 to 9 and a to f (a corresponds to 10 in the decimal notation and f corresponds to 15)] in the hexadecimal notation.

In the pattern detection apparatus 100 of the present embodiment, for a plurality of the comparison units 120-1 to 120-N, the entry patterns ETP1 to ETPN desired to be detected preliminarily and the flag signals corresponding to them are set. As mentioned above, the entry patterns are held by the entry pattern holding unit 124 and the flag signals are held by the flag holding unit 126. Therefore, in each comparison unit, a comparison between the input data IND provided from the memory/BS-I/F 110 and the entry patterns is performed by the comparator 122. As a result, when the input data IND and the entry pattern agree, the hit signal HIT1 is outputted, then, the flag FLG1 held by the flag 126 is outputted as the control signal.

FIG. 7 shows an example of the entry patterns ETP1 to ETPN desired to be detected and the flag signals FLG1 to FLGN corresponding to each entry pattern in the pattern detection apparatus 100 of the present embodiment.

Note that, in the present example, the flag signals FLG1 to FLGN are composed of, for example, two bits data, and these two bits are the set signal SET and the clear signal (or the reset signal) CLR controlling the RS flip-flop as shown in FIG. 7.

The flag signal is held by the flag holding unit 126 shown in FIG. 1. As mentioned above, the flag holding unit 126 generates the control signals CTL1 to CTLN, namely, the set signals SET1 to SETN and the clear signals CLR1 to CLRN in response to the flag signals FLG1 to FLGN.

As shown in FIG. 7, the flag signal takes four states of (1, 1), (1, 0), (0, 1) and (0, 0). The contents of each state are as follows.
(1) When the flag signal is (1, 0), the set signal is held in an active state, for example, a high level, and the clear signal is held in an inactive state, namely, a low level.
(2) When the flag signal is (0, 1), the set signal is held in an inactive state, namely, a low level, and the clear signal is held in an active state, namely, a high level.
(3) When the flag signal is (0, 0), the set signal and the clear signal are held in a non-active state together. Therefore, a state of the pattern detection window signal PDW does not change.
(4) The flag signal (1, 1) is a forbidden state.

Next, with referring to FIG. 7, a concrete example of the entry pattern and the flag signal corresponding to that will be explained.

As shown in FIG. 7, first, the packet start code, namely, the flag signal corresponding to a 32 bits entry pattern [0x000001ba] is set as (1, 0).

Next, the video stream start code, namely, the flag signal corresponding to an entry pattern [0x00000e-] is set as (0, 1). In a similar way, the audio stream code, namely the flag signal corresponding to an entry pattern [0x000001c-] or [0x000001d-] is set as (0, 1) together. Then, the flag signal corresponding to an entry pattern [0x000001b-] is set as (0, 0).

Next, in response to the entry pattern shown in FIG. 7 and the flag signal corresponding to them, a detection action of the pattern detection apparatus 100 of the present embodiment will be explained.

In response to the entry pattern set as shown in FIG. 7 and the flag signal corresponding to them, the pattern detection apparatus 100 of the present embodiment detects a data series agreeing with the entry pattern from the inputted data stream, and further registers each detection position, namely, match position in the corresponding register of the detection position registration unit 140 in response to the flag signal corresponding to each entry pattern.

Concretely, for example, when a data series agreeing with the packet start code, namely, the entry pattern [0x000001ba] is detected, since the flag signal corresponding to the entry pattern is (1, 0), in the pattern detection/non-detection control unit 130, the pattern detection window signal PDW is held in an active state, for example, a high level, in response to this, the holding enable signal HEB in an active state is outputted by the pattern detection/non-detection control unit 130. Consequently, in the detection position registration unit 140, the match position corresponding to the packet start code is registered in the corresponding register.

Then, as shown in FIG. 3, a PES packet is inputted following a packet header having the packet start code as a head. In the head of the PES packet, a video stream start code is arranged. Namely, the video stream start code that is in the head of the EPS packet is detected by the entry pattern [0x000001e-]. At this time, in the pattern detection/non-detection control unit 130, since the pattern detection window signal PDW is in an active state, the holding enable signal HEB is outputted in response to the hit signal HIT as shown FIG. 3. In response to this, in the detection position registration unit 140, the match position is registered. Further, as shown in FIG. 7, since the flag signal corresponding to the entry pattern [0x000001e-] is set as (0, 1), in the pattern detection/non-detection control unit 130, the pattern detection window signal PDW is changed to an inactive state, for example, a low level as shown in FIG. 3. Therefore, since the hit signal HIT detected in response to the entry pattern, for example, a user data start code [0x000001b2], a group start code [0x000001b8] and so on becomes invalid in a period of the PES packet, a registration of the match positions corresponding to these entry patterns is not performed.

As mentioned above, in the pattern detection apparatus 100 of the present embodiment, when the entry pattern [0x000001ba] corresponding to the packet start code is detected, since the pattern detection window signal PDW is set in an active state in response to the flag signal (1, 0) corresponding to the entry pattern, the holding enable signal HEB is outputted in response to the hit signal HIT by the pattern detection/non-detection control unit 130. For this reason, in the detection position registration unit 140, the match position in response to the entry pattern is registered in the register. Then, when the video stream code in the head of the PES packet is detected, since the flag signal corresponding to the entry pattern [0x000001e-] is set as (0, 1), the pattern detection window signal PDW is set in an inactive state. Even if the hit signal HIT is outputted after this time in response to this, since a registration of the match position is not performed, only necessary match positions are registered, the efficiency of the hardware resource, foe example, the register, of the detection position registration unit 140 can be improved.

Further, by using the pattern detection apparatus 100 of the present embodiment, in the case that the PES packet of the video stream is inputted following the packet start code as mentioned above, and even in the case that the PES packet of the system header and the audio stream is inputted following the packet start code, in the pattern detection/non-detection control unit 130, the pattern detection window signal PDW is controlled correctly, and a registration of the match positions can be performed for only necessary hit signals.

As shown in FIG. 3, in the case that the PES packet of the system header and the audio stream is inputted following the packet header, first, the packet stream code in the head of the packet header is detected by the entry pattern [0x000001ba]. Then, the detected match position is registered in the register in the detection position registration unit 140. Further, since the flag signal corresponding to the entry pattern at this time is (1, 0), the pattern detection windows signal PDW is set in an active state in the detection unit is set in an active state in the pattern detection/non-detection control unit 130.

Next, as shown in FIG. 3, the system header start code in the head of the system header is detected by the entry pattern [0x000001b-]. Further, as shown in FIG. 7, since the flag signal corresponding to the entry pattern [0x000001b-] is (0, 0), by this detection, a state of the pattern detection window signal PDW of the pattern detection/non-detection control unit 130 does not change and it is held in an active state.

When the PES packet of the audio stream following the system header is inputted, the audio stream start code in the head of that is detected by the entry pattern [0s000001c-] or [0x000001d-]. As shown in FIG. 7, the flag signal corresponding to the entry pattern [0x000001c-] or [0x000001d-] is (0, 1). For this reason, by the detection of the audio stream start code, the pattern detection window signal PDW of the pattern detection/non-detection control unit 130 is changed to an inactive state. Therefore, even if a hit signal HIT is obtained by the other entry pattern in a period of the PES packet of the audio stream, the holding enable signal is not outputted and a registration of the match position is not performed.

As explained above, according to the pattern detection apparatus 100 of the present embodiment, in each comparison unit, an entry pattern desired to be detected and a flag signal corresponding to the entry pattern are stored by the entry pattern holding unit 124 and the flag holding unit 126, the input data IND and the entry pattern held by the entry pattern holding unit 124 are compared by the comparator 122, when agreeing, a hit signal is outputted, the control signal is outputted in response to the flag signal held by the flag holding unit 126, the holding enable signal HEB is outputted in response to the hit signal and the control signal in the pattern detection/non-detection control unit 130 only when a necessary entry pattern is detected, and in response to this, the entry pattern and the detection position are registered in the detection position registration unit 140. Therefore, the detection position for only necessary hit detections can be registered, and it becomes possible to utilize a resource of hardware such efficiently as a register in the detection position registration unit 140 for registering the detection position.

In enforcing the present invention, without limited to the above-mentioned exemplification, various substitute technologies performed by a person with an ordinary skill in the art can be applied.

For example, a plurality of the register 1 to the register M in the detection position registration unit 140 can be replaced to semiconductor storage apparatuses such as a RAM.

Although the case of inputting a corresponding entry pattern ETP and a flag FLG from the outside of the pattern detection apparatus 100 to the entry pattern holding unit 124 and the flag holding unit 126 in each comparison unit 120-1 to 120-N respectively, and holding them in the entry pattern holding unit 124 and the flag holding unit 126 is exemplified, in the case that the entry pattern ETP and the flag FLG are fixed, such data can be held preliminarily. In that case, the entry pattern holding unit 124 and the flag holding unit 126 can be configured by a semiconductor memory and so on. In that case, the flag holding unit 126 may only have a function outputting the held flag FLG1 when the first hit signal HIT1 is outputted from the comparator 122, namely, a gate function.

As mentioned above, in the case that the entry pattern holding unit 124 and the flag holding unit 126 are realized with a semiconductor memory, the entry pattern holding unit 124 and the flag holding unit 126 in each of the comparison units 120-1 to 120-N can be realized with one semiconductor memory. Therefore, the configuration example of FIG. 1 is conceptual, actually, a plurality of the entry pattern holding units 124 and a plurality of the flag holding units 126 in a plurality of the comparison units 120-1 to 120-N can be configured with one semiconductor memory and so on.

Further, the pattern detection apparatus of the present invention illustrated in FIG. 1 can be configured as one semiconductor integrated apparatus.

Although a video signal coded with the MEPG is exemplified as data inputted from the memory/BS-I/F 110, an application target of the pattern detection apparatus of the present invention is not limited to the video signal and so on.

For example, the case that two or more data to be a search target is extracted from among data stored in the memory may be acceptable. In such a case, the readout pointer RDP described by referring to FIG. 1 corresponds to a readout address of the memory and so on.

As described above, according to the pattern detection apparatus of the present invention, since in response to the flag signals set corresponding to each of the entry patterns (search target pattern), only necessary match positions are registered and other match positions can be discarded, a resource of the circuit registering the match positions (detection positions), namely, the register and the memory storing the entry patterns and the match positions corresponding to them can be used efficiently.

Further, according to the present invention, there are advantages that the pattern detection can be performed only in a necessary space, an agreement detection signal can be ignored in a zone unnecessary of detecting, and the overhead of the processing can be reduced.

### LIST OF REFERENCES

100...pattern detection apparatus
110...memory/bit stream interface
120-1 to 120-N...comparison units
   122...comparator
   124...entry pattern holding unit
   126...flag holding unit
130...pattern detection/non-detection control unit
140...detection position registration unit

## Claims

1. A pattern detection apparatus detecting data of a predetermined pattern and saving a position of the detected data among inputted data, comprising:
a plurality of comparison means (122-1 to 122-N) corresponding to the number (N) to be detection targets and pattern detection control means (130), and
detection position registration means (140) having a plurality of holding portions corresponding to the number (M) to be detection targets, wherein
each of a plurality of the comparison means (122-1 to 122-N) has
a detection pattern data holding unit (124) holding data pattern to be a detection target,
a flag holding unit (126) holding a flag signal as information defining a pattern detection window (PDW) corresponding to the data pattern to be a detection target, and
a comparison unit (122) comparing the input data with the data pattern to be a detection target outputted from the detection pattern data holding unit (124) and outputting an agreement signal (HIT) when agreeing,
the flag holding unit (126) outputs a held flag (FLG1) to the pattern detection means (130) when the agreement signal is outputted,
the pattern detection control means (130)
generates a pattern detection window signal (PDW) based on a flag signal (FLG) outputted from a comparison unit of each of the comparison means (122-1 to 122-N) and outputs it to the detection position registration means (140) when an agreement signal is outputted from either of a plurality of the comparison means (122-1 to 122-N), and
the detection position registration means (140) holds information showing a position of the inputted data in a plurality of the holding portions sequentially.

2. A pattern detection apparatus as set forth in claim 1, wherein
the pattern detection position control means (130) comprises:
a first logical addition operation circuit (131) operating logical addition of a plurality of agreement signals (first hit signals HIT1) outputted from a plurality of the comparison means (122-1 to 122-N) and outputting a total agreement signal (HIT) in an enable state when either of agreement signal among a plurality of agreement signals is in an enable state;
a second logical addition operation circuit (132-1) operating logical addition of a plurality of set signals (SET) included in a flag signals (FLG) outputted from a plurality of the comparison means (122-1 to 122-N) and outputting a set signal in an enable state when either of set signal among a plurality of set signals shows an enable state;
a third logical addition operation circuit (132-2) operating logical addition of a plurality of clear signals (CLR) included in a flag signal (FLG) outputted from a plurality of the comparison means (122-1 to 122-N) and outputting a clear signal in an enable state when either of a plurality of clear signals shows an enable state;
pattern detection window signal generation means (133) making the pattern detection window signal (PDW) an active state in response to a set signal in an enable state outputted from the second logical addition operation circuit (132-1) and making the pattern detection window signal (PDW) an inactive state in response to a clear signal in an enable state outputted from the third logical addition operation circuit (132-2), and
a logical addition circuit (134) outputting a holding enable signal (HEB) when a pattern detection window signal (PDW) outputted from the pattern detection window signal generation means (133) is in an enable state and the total agreement signal (HIT) outputted from the first logical addition operation circuit (131) is in an enable state.

3. A pattern detection apparatus as set forth in claim 1 or 2, wherein
the detection position registration means (140) comprises registers corresponding to the number of patterns of the detection targets.

4. A pattern detection apparatus as set forth in claim 1 or 2, wherein
the detection position registration means (140) is memory means having a capacity corresponding to the number of patterns of the detection targets.

5. A pattern detection apparatus as set forth in either of claims 1 to 4, wherein
the input data is moving image data and audio data compressed and coded in accordance with the MPEG standard.

6. A pattern detection apparatus as set forth in claim 4, wherein
the detection target pattern is set in response to identification data showing a head of a packets included in data compressed and coded in accordance with the MPEG standard.

7. A pattern detection circuit comprising:
detection pattern storage means holding an entry pattern to be a detection target;
flag storage means storing a flag signal corresponding to each of the entry pattern;
comparison means comparing inputted data with an entry pattern stored in the detection pattern storage means, and
detection position storage means storing the detection position in response to a flag signal corresponding to the entry pattern stored in the flag storage means when the input data and the entry pattern agree as a result of a comparison of the comparison means.

8. A pattern detection circuit as set forth in claim 1, further comprising:
detection position storage control means setting a pattern detection window signal in an active state when the flag signal corresponding to the entry pattern shows to store a detection position, and setting the pattern detection window signal in an inactive state when the flag signal corresponding to the entry pattern shows not to store a detection position in the case of judged that the input data and the entry pattern agree by the comparison means.

9. A pattern detection circuit as set forth in claim 2, wherein
the detection position storage means stores a detection position of the entry pattern when the pattern detection window signal is in an active state, and does not store a detection position of the entry pattern when the pattern detection window signal is in an inactive state.

10. A pattern detection circuit as set forth in claim 1, wherein
the input data is moving image data and audio data compressed and coded in accordance with the MPEG standard.

11. A pattern detection apparatus as set forth in claim 2, wherein the entry pattern is set in response to identification data showing a head of packets included in the compressed and coded data.
